Europäisches Patentamt

European Patent Office

Office européen des brevets

(11) Publication number: 0 198 619
A2

# EUROPEAN PATENT APPLICATION

(21) Application number: 86302286.9

(22) Date of filing: 26.03.86

(51) Int. Cl.4: **G11B 5/60 , G11B 5/187**

(30) Priority: 02.04.85 US 718910

(43) Date of publication of application:
22.10.86 Bulletin 86/43

(84) Designated Contracting States:
DE FR GB IT

(71) Applicant: **International Business Machines
Corporation
Old Orchard Road
Armonk, N.Y. 10504(US)**

(72) Inventor: **Yeack-Scranton, Celia Elizabeth
Twin Lakes Road
South Salem New York 10590(US)**
Inventor: **Thompson, David Allen
Twin Lakes Road
South Salem New York 10590(US)**

(74) Representative: **Moss, Robert Douglas
IBM United Kingdom Limited Intellectual
Property Department Hursley Park
Winchester Hampshire SO21 2JN(GB)**

(54) **Slider for supporting a transducing head.**

(57) In a magnetic information storage device of the type having a slider which moves relative to a magnetic recording medium such as a disk, the slider has a non-rectangularly shaped air bearing surface that provides the slider with a high degree of stability. The non-rectangular shape is preferably either a triangle or a trapezium. The non-rectangularly shaped slider includes a tapered leading edge and a flat vertical surface as its trailing edge. A conventional thin film head element can be deposited on the vertical surface, if the slider is fabricated from ceramic material, or a conventional head element having a wound coil can be disposed on the vertical surface, if the slider is fabricated from ferrite material.

FIG. 2

Rank Xerox

# SLIDER FOR SUPPORTING A TRANSDUCING HEAD

## Technical Field of the Invention

The present invention relates to air bearing sliders for supporting transducing heads.

## Background Art

Air bearing sliders for information storage devices, such as magnetic disk drives, are well known in the art. Such sliders are typically fabricated from a ceramic material and include a thin film magnetic head element which is typically mounted on the slider. Alternatively, the slider may be fabricated from a ferrite material and utilise a head element having a wound coil. The slider is connected to a suspension assembly. The suspension assembly holds the slider and the magnetic head element above the magnetic recording medium or disk. An actuator connected to the suspension assembly moves the suspension assembly, the slider, and the head across the disk. As the disk rotates, air is forced between the disk and the slider, and the slider "flies" over the disk with the magnetic head element held in close proximity to the disk, but not in contact with the disk. The slider typically includes some means for damping, in order to minimise the oscillations of the slider and to prevent it from contacting the disk. The shape of the slider often provides such damping, and in the prior art sliders have been shaped to include a plurality of rails for damping and for other aerodynamic effects.

A representative example of such a prior art non-contact slider having rails is disclosed in US-A-4,130,847, entitled, "Corrosion Resistant Thin Film Head Assembly and Method for Making", dated December 19, 1978, by Head et al, and assigned to the assignee of the present invention. The slider of the '847 patent includes a generally rectangular ceramic body having three rails. The leading edges of the rails are tapered and the trailing end of the slider includes a thin film transducer or head element deposited thereon. The slider is connected to a suspension assembly which supports the slider and the head element.

A representative example of a contact slider is disclosed in US-A-4,191,980 which is entitled, "Transducers with Tapered Edge Profiles and Assembly Thereof", dated March 4, 1980, by King et al, and assigned to the assignee of the present invention. The '980 patent discloses an assembly having a pair of magnetic transducers held in substantial contact with a flexible magnetic disk. Each transducer has a pair of disk-contacting lands broadening in contour toward the trailing end of the transducer and tapering in contour toward the leading end of the transducer, with the leading and side edges of each land being gradually faired into the surrounding active surface of the transducer and with the trailing section of the land forming a sharp edge. One land of each transducer incorporates the read/write magnetic gap in it while the other land is vacant and dimensionally wider. The transducers are mounted on opposite sides of a disk with the lands located opposite to and in alignment with the land of the other.

Another representative example of a non-contact slider is disclosed in US-A-4,396,965 entitled, "Flying Head with Foil Support", dated August 2,1983, by Dean DeMoss, and assigned to Burroughs Corporation. The '965 patent discloses a head assembly with a spherical shaped slider in which the surface of the head assembly includes slots or bleed holes for controlling air pressure or damping.

## Disclosure of the Invention

One of the major problems associated with prior art non-contact sliders is that they are sensitive to off-angle air flows, ie, air that flows at an angle oblique to the relative movement of the slider and the disk. These off-angle air flows can skew the position of the slider or cause it to roll. The skewing or rolling of the slider can adversely effect the fly height of the head element, thereby causing it to oscillate or to make contact with the disk. An oscillating head can result in distorted data transfer to or from the disk and unexpected contact of the head with the disk can cause damage to the disk.

Accordingly, the present invention provides a slider for supporting a transducing head and for use in an information storage device using a rotatable storage medium, the slider having a body on which is formed a tapered air bearing surface, the body having two convergent sides such that the body tapers from a wider end to a narrower end and the tapered air bearing surface having a similar taper to that of the body and being substantially coextensive with the body.

Such a slider has been found to be less sensitive to air flowing at an angle oblique to the relative movement of the slider and the disk.

The slider is preferably either generally triangular or generally trapezial in overall shape and the convergent sides are preferably bevelled at their junctions with the tapered air bearing surface to increase the aerodynamic lift available. This aerodynamic lift is further improved if the narrower end of the slider is bevelled at its junction with the tapered air bearing surface.

To improve the stability of the slider in operation, it is preferred that the tapered air bearing surface includes a plurality of surface irregularities, these latter preferably taking the form of pits and/or grooves.

An additional means for improving the stability of the slider in operation is to make the narrower end rounded, thereby reducing the aerodynamic drag on the slider.

The slider is preferably of the form having the wider end substantially flat and substantially perpendicular to the tapered air bearing surface. The transducing head is carried on this end surface.

Brief Description of the Drawings

Figure 1 is a perspective view of a prior art slider connected to a portion of a suspension system;
Figure 2 is a perspective view of a slider according to the present invention, connected to a portion of a suspension system;
Figure 3 is another perspective view of the slider of Figure 2;
Figure 4 is a perspective view of an alternative embodiment of slider according to the present invention having tapered upper and lower leading edges;
Figure 5 is a perspective view of a further embodiment of slider according to the present invention, having a rounded leading edge and a plurality of slots across its bottom surface; and
Figure 6 is a perspective view of a slice of ceramic material from which a plurality of sliders according to the invention can be made.

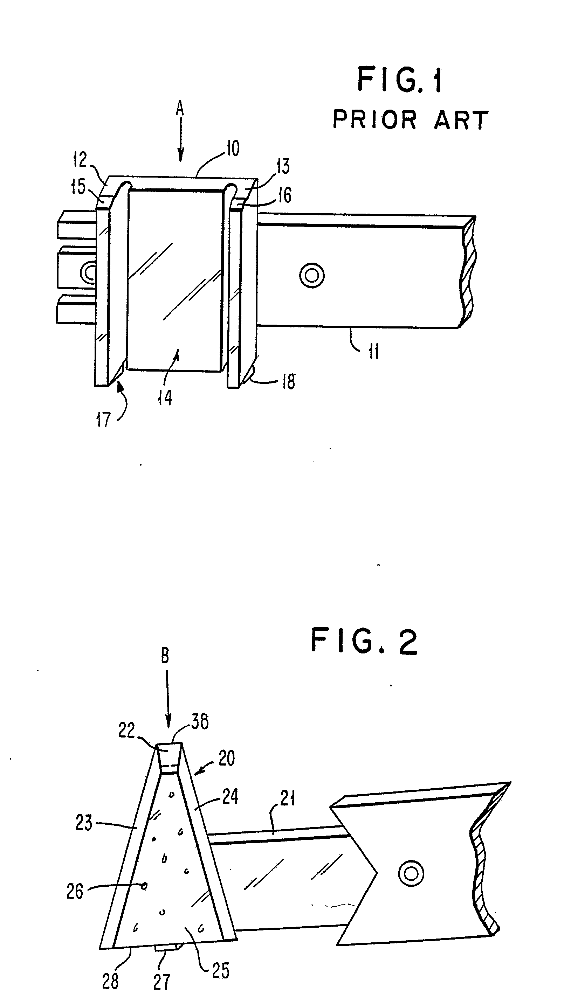

Referring to Figure 1, the perspective view illustrates a typical prior art slider 10 connected to a portion of a suspension assembly 11. The slider 10 is of a type generally disclosed in the aforementioned US-A-4,130,847 except that it includes two rails 12, 13 instead of the three rails disclosed in the '847 patent. As a data storage disk (not shown) rotates beneath the bottom surface 14 of the slider 10, air is dragged between the slider and the disk in the direction of arrow A. The tapered leading edges 15, 16 of rails 12, 13 compress the air and cause the slider 10 to lift up or "fly" over the surface of the disk. The rails 12, 13 tend to prevent air from escaping from beneath the slider 10. Some air, however, does leak out. This leaking air damps the slider 10 so that if the slider oscillates, it is damped to reduce the possibility of the slider hitting the disk. The rear of rails 12, 13 have thin film head elements 17, 18 disposed thereon. At very low fly heights of the heads 17, 18, the slider 10 is particularly susceptible to hitting the disk because the air flowing from beneath the rails 12, 13 cannot provide sufficient damping.

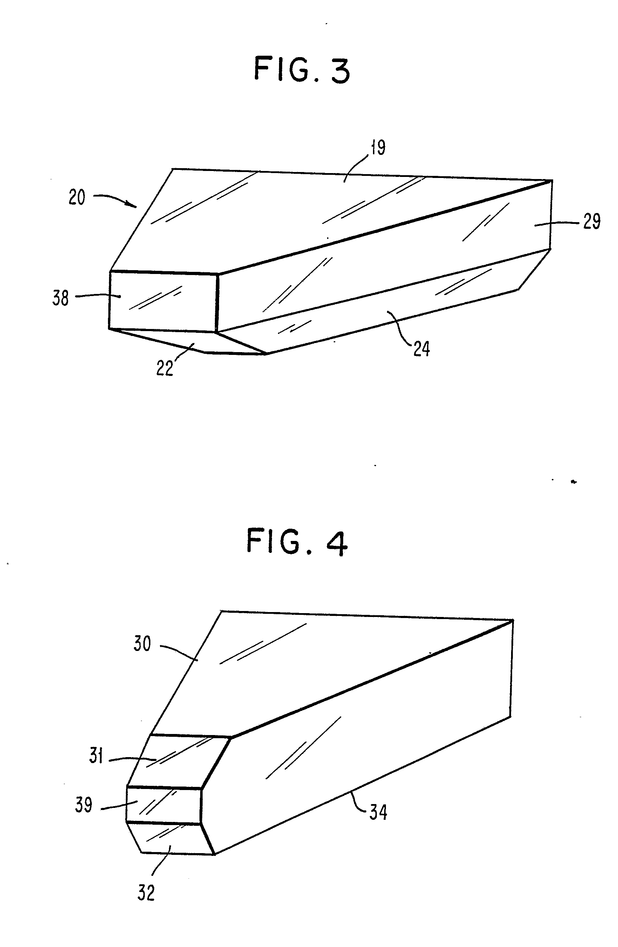

Referring now to Figures 2 and 3, these perspective views illustrate the non-rectangular slider 20 of the present invention connected to a portion of a suspension system 21. The slider 20 is preferably fabricated from a conventional ceramic material or ferrite material and includes a substantially triangular shape or trapezial shape. The leading end 38 of the slider 20 includes a leading edge 22 which is bevelled. The bottom edges 23, 24 are preferably bevelled. The side 29 may be angled with respect to the top 19 and bottom 25 of the slider 20. The bevelling of the sides of the slider 20 make the slider less susceptible to skewing. The bottom surface 25 includes a plurality of holes, pits or etched pockets 26 to provide damping. The trailing edge 28 of the slider 20 is a substantially flat surface with a conventional thin film head element 27 or a head element having a wound coil disposed thereon. If the slider 20 is made of a ferrite material rather than a ceramic material as known to those skilled in the art, then the head element 27 would be a wound coil rather than a thin film deposition. Like the slider 10 above, air flows beneath the slider 20 and the disk in the direction of arrow B, thereby causing the slider 20 and head element 27 to "fly" over the disk.

The head element 27 may be of a type generally disclosed in US-A-4,219,853 which is entitled, "Read/Write Thin Film Head", dated August 26, 1980, by Albert et al, and assigned to the assignee of the present invention. If a single head element 27 is used, preferably the head element 27 is disposed in the centre of the flat surface of the trailing edge 28. Centring of the head element 27 makes it less susceptible to roll. If multiple heads are used, for example to perform read/write operations, the multiple heads may be disposed in a side by side relationship on the flat surface of the trailing edge 28.

Referring now to Figure 4, a perspective view illustrates a modified slider 30. The slider 30 is substantially similar to the slider 20 of Figures 2 and 3, except that the two bottom edges, including edge 34, are not bevelled, and the leading or front end 39 includes a top bevel 31 as well as a bottom bevel 32.

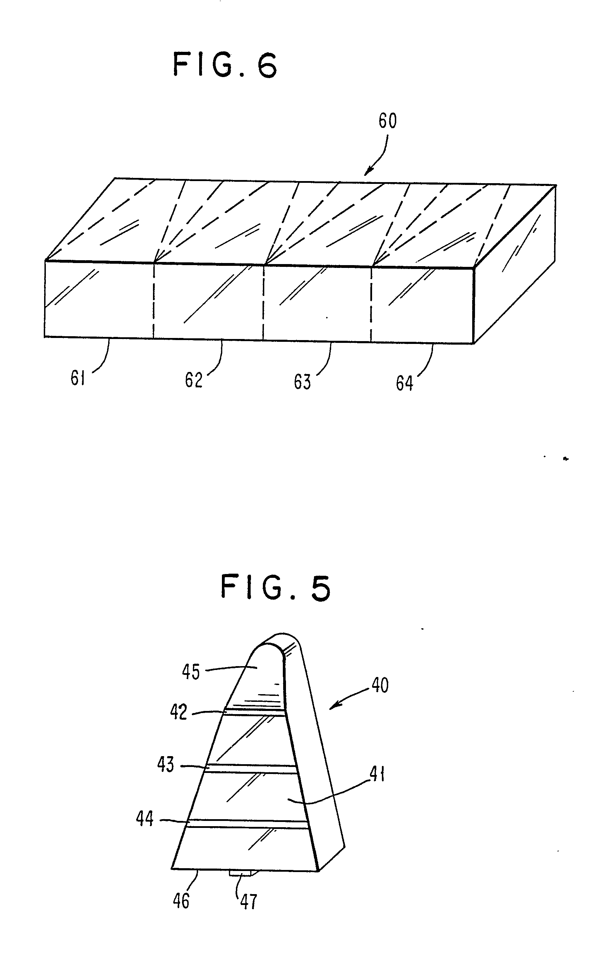

Referring now to Figure 5, a perspective view illustrates still further modifications to the substantially triangularly shaped slider of the present invention. In Figure 5, the bottom surface 41 of a slider 40 is depicted. The bottom surface 41 of slider 40 includes a plurality of slots 44 in lieu of the holes 26 of Figure 2. The slots 42, 43, 44 provide the slider 40 with damping as well as lower stiffness. The slider 40 also includes a bevelled leading edge 45 that is rounded at its apex. Like the above described sliders 20 and 30, the slider 40 includes a head element 47 disposed upon the flat surface of its trailing edge 46.

The novel sliders 20, 30, 40 disclosed herein, all comprise a shaped body having at least three sides which form a predetermined shape. The predetermined shape having two sides which are angled with respect to the movements of the slider relative to the rotatable storage medium in operation.

All include a single rail slider with a non-rectangular air bearing surface which is preferably triangular or trapezial. Damping is provided by pockets, holes, pits or slots in the bottom surface of the slider. These designs provide several advantages. First, the side air flow does not leave the surface of the slider as quickly as those of a rectangular slider. Second, the side compression minimises the deleterious effects of any skew of the slider with respect to the incoming air flow. Third, damping is provided by an irregular bottom surface of etched pockets to relieve sudden pressure fluctuations. Fourth, the bevelled front or leading end reduces the drag coefficient of the head, thus making the slider more stable. Fifth, this design allows the potential reduction of slider mass while maintaining sufficient area on the trailing face, where the thin film element is to deposited or wound coil is to be located. Sixth, the non-rectangular structure gives more roll stability than a long, thin, rectangular single rail slider bearing of the same area. Seventh, this non-rectangular structure is easily manufactured and the choice of a smaller size allows more sliders per waver.

The relative ease of manufacture can be appreciated from the illustration of Figure 6. In Figure 6, there is a perspective view of a slice 60 of a wafer of ceramic material. The slice 60 may be cut along the dotted lines to provide a plurality of sliders 61-64. The sliders 61-64 may be further tapered or beveled in accordance with the teachings herein to provide the desired characteristics.

## Claims

1. A slider (20) for supporting a transducing head (27) and for use in an information storage device using a rotatable storage medium, said slider having a body on which is formed a tapered air bearing surface (25), characterised in that:

the body has two convergent sides (only one shown, 29) such that the body tapers from a wider end (28) towards a narrower end (38); and

in that said tapered air bearing surface has a similar taper to that of the body and is substantially coextensive with the body.

2. A slider as claimed in claim 1, in which the overall shape of the slider is generally triangular.

3. A slider as claimed in claim 1, in which the overall shape of the slider is generally trapezial.

4. A slider as claimed in any preceding claim, in which said two convergent sides are bevelled (23, 24) at their junctions with said tapered air bearing surface.

5. A slider as claimed in any preceding claim, in which said narrower end (38) is bevelled at its junction with the tapered air bearing surface.

6. A slider as claimed in any preceding claim, in which the tapered air bearing surface includes a plurality of surface irregularities (26).

7. A slider as claimed in claim 6, in which said plurality of surface irregularities includes a plurality of pits.

8. A slider as claimed in claim 6 or claim 7, in which said plurality of surface irregularities includes a plurality of grooves.

9. A slider as claimed in any preceding claim in which said wider end (28) is substantially flat and substantially perpendicular to said tapered air bearing surface and carries the transducing head (27).

10. A slider as claimed in any preceding claim, in which said narrower end is rounded.

# FIG.1
## PRIOR ART

# FIG.2

# FIG. 3

# FIG. 4

# FIG. 6

60

61  62  63  64

# FIG. 5

45

42

43

44

40

41

46  47